# EUROPEAN PATENT APPLICATION

(11) **EP 3 579 113 A1**
(43) Date of publication of application: **11.12.2019**
(21) Application number: 18195239.1
(22) Date of filing: 18.09.2018
(51) Int. Cl.: G06F 15/76, A45D 44/00, G06Q 30/00

(54) **SYSTEMS AND METHODS FOR CONDUCTING MAKEUP CONSULTATION SESSIONS**

(30) Priority: 06.06.2018 US 201862681171 P; 20.08.2018 US 201816105008
(71) Applicant: Perfect Corp., 231 New Taipei City (TW)
(72) Inventor: LIN, Kuo-Sheng, New Taipei City 241 (TW); HUANG, Pei-Wen, Taipei City (TW)
(74) Representative: Zinkler, Franz

(57) **Abstract**

A makeup consultation server device obtains a request from a client device to initiate a makeup consultation session and obtains target attributes of a user of the client device. The makeup consultation server device determines a grouping of beauty advisors currently online and accesses profile information associated with each of the beauty advisors in the grouping. The makeup consultation server device matches the user with at least one of the beauty advisors based on the target attributes, and the profile information. The makeup consultation server device establishes the makeup consultation session between the client device and an advisor device of one of the matching beauty advisors.

## Description

### CROSS-REFERENCE TO RELATED APPLICATION

This application claims priority to, and the benefit of, U.S. Provisional Patent Application entitled, "Method to assign proper operator while receiving a video call," having Serial No. 62/681,171, filed on June 6, 2018, which is incorporated by reference in its entirety.

### TECHNICAL FIELD

The present disclosure generally relates systems and methods for conducting makeup consultation sessions in a networked environment.

### BACKGROUND

Individuals invest a substantial amount of money in makeup tools and accessories. However, it can be challenging to achieve the same results as a makeup professional even with the aid of conventional self-help guides.

### SUMMARY

In accordance with one embodiment, a makeup consultation server device obtains a request from a client device to initiate a makeup consultation session and obtains target attributes of a user of the client device. The makeup consultation server device determines a grouping of beauty advisors currently online and accesses profile information associated with each of the beauty advisors in the grouping. The makeup consultation server device matches the user with at least one of the beauty advisors based on the target attributes, and the profile information. The makeup consultation server device establishes the makeup consultation session between the client device and an advisor device of one of the matching beauty advisors.

Another embodiment is a system that comprises a memory storing instructions and a processor coupled to the memory. The processor is configured by the instructions to obtain a request from a client device to initiate a makeup consultation session and obtain target attributes of a user of the client device. The processor is further configured to determine a grouping of beauty advisors currently online and access profile information associated with each of the beauty advisors in the grouping. The processor is further configured to match the user with at least one of the beauty advisors based on the target attributes, and the profile information. The processor is further configured to establish the makeup consultation session between the client device and an advisor device of one of the matching beauty advisors.

Another embodiment is a non-transitory computer-readable storage medium storing instructions to be implemented by a computing device having a processor, wherein the instructions, when executed by the processor, cause the computing device to obtain a request from a client device to initiate a makeup consultation session and obtain target attributes of a user of the client device. The processor is further configured to determine a grouping of beauty advisors currently online and access profile information associated with each of the beauty advisors in the grouping. The processor is further configured to match the user with at least one of the beauty advisors based on the target attributes, and the profile information. The processor is further configured to establish the makeup consultation session between the client device and an advisor device of one of the matching beauty advisors.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

Various aspects of the disclosure can be better understood with reference to the following drawings. The components in the drawings are not necessarily to scale, with emphasis instead being placed upon clearly illustrating the principles of the present disclosure. Moreover, in the drawings, like reference numerals designate corresponding parts throughout the several views.
FIG. 1 is a block diagram of a system for implementing a makeup consultation platform in accordance with various embodiments of the present disclosure.
FIG. 2 is a schematic diagram of the makeup consultation server device of FIG. 1 in accordance with various embodiments of the present disclosure.
FIG. 3 is a top-level flowchart illustrating examples of functionality implemented as portions of the makeup consultation server device of FIG. 1 according to various embodiments of the present disclosure.
FIG. 4 illustrates an example user interface displayed on the client device in FIG. 1 according to various embodiments of the present disclosure.
FIG. 5 illustrates matching of beauty advisors with a user performed by the makeup consultation server device in FIG. 1 according to various embodiments of the present disclosure.

### DETAILED DESCRIPTION

Various embodiments are disclosed for facilitating the application of makeup by implementing an improved platform for makeup consultation sessions between an advisor device utilized by a beauty advisor and a client device utilized by a user seeking the consultation. As described in more detail below, the system includes a makeup consultation server device that obtains a makeup consultation request initiated by a user at a client device. Based on target attributes extracted by the makeup consultation server device from digital images of the user and based on additional information provided by the user, the makeup consultation server device identifies one or more suitable beauty advisors and establishes a consultation session between the client device of the user and the advisor device utilized by the beauty advisor. The beauty advisor then communicates directly with the user and provides a consultation tailored specifically to the user.

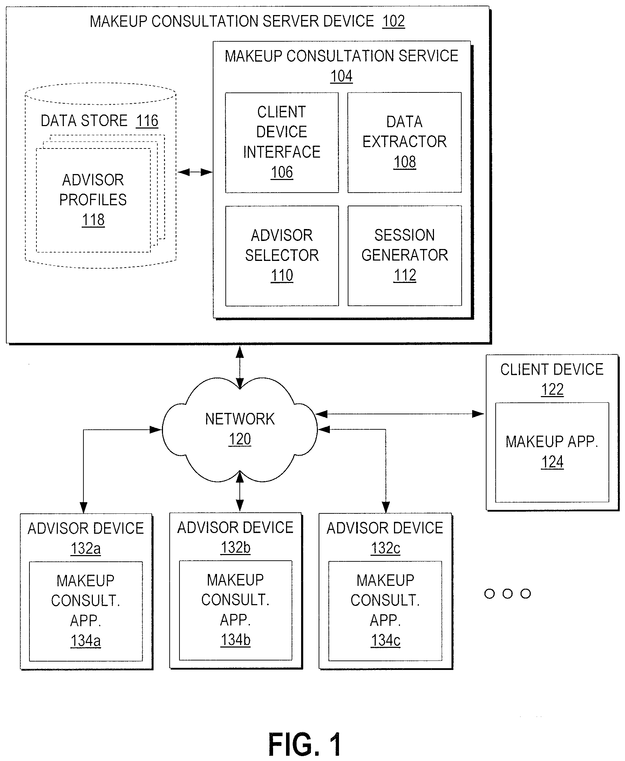

A description of a system for implementing a makeup consultation platform is now described followed by a discussion of the operation of the components within the system. FIG. 1 is a block diagram of a networked environment that includes a makeup consultation server device 102 in which the techniques for establishing makeup consultation sessions disclosed herein may be implemented. The makeup consultation server device 102 may be embodied as a server computer, a cloud-based computing device, or any other system providing computing capability. Alternatively, the makeup consultation server device 102 may employ one or a plurality of computing devices that can be arranged, for example, in one or more server banks, computer banks or other arrangements. Such computing devices can be located in a single installation or can be distributed among different geographical locations. The networked environment also includes a client device 122 and one or more advisor devices 132 where each device may be embodied as, but not limited to, a smartphone, a tablet computing device, a laptop computer, and so on. Each of the client device 122 and the advisor devices 132 may be further equipped with digital content recording capabilities (*e*.*g*., front-facing camera).

The makeup consultation server device 102, the client device 122, and each of the advisor devices 132 are communicatively coupled to each other via a network 120 such as, for example, the Internet, intranets, extranets, wide area networks (WANs), local area networks (LANs), wired networks, wireless networks, or other suitable networks, *etc*., or any combination of two or more such networks. The client device 122 is communicatively coupled to the makeup consultation server device 102 for initiating makeup consultation sessions, where the client device 122 uploads videos or digital images of the user to the makeup consultation server device 102.

As one of ordinary skill will appreciate, the videos may be encoded in formats including, but not limited to, Motion Picture Experts Group (MPEG)-1, MPEG-2, MPEG-4, H.264, Third Generation Partnership Project (3GPP), 3GPP-2, Standard-Definition Video (SD-Video), High-Definition Video (HD-Video), Digital Versatile Disc (DVD) multimedia, Video Compact Disc (VCD) multimedia, High-Definition Digital Versatile Disc (HD-DVD) multimedia, Digital Television Video / High-definition Digital Television (DTV/HDTV) multimedia, Audio Video Interleave (AVI), Digital Video (DV), QuickTime (QT) file, Windows Media Video (WMV), Advanced System Format (ASF), Real Media (RM), Flash Media (FLV), an MPEG Audio Layer III (MP3), an MPEG Audio Layer II (MP2), Waveform Audio Format (WAV), Windows Media Audio (WMA), or any number of other digital formats. The digital images may be encoded in any of a number of formats including, but not limited to, JPEG (Joint Photographic Experts Group) files, TIFF (Tagged Image File Format) files, PNG (Portable Network Graphics) files, GIF (Graphics Interchange Format) files, BMP (bitmap) files or any number of other digital formats.

A makeup consultation service 104 executes on a processor of the makeup consultation server device 102 and includes a client device interface 106, a data extractor 108, an advisor selector 110, and a session generator 112. The client device interface 106 is configured to obtain a request from a client device 122 to initiate a makeup consultation session. For some embodiments, the client device interface 106 initiates a communication session (*e*.*g*., video conference) with the client device 122 and causes an image of a virtual advisor to be displayed in a user interface displayed on the client device 122. As discussed in more detail below, the makeup consultation service 104 later establishes a makeup consultation session directly between the client device 122 and an advisor device 132 of a matching beauty advisor. At that time, the image of the virtual advisor may be replaced with an image of the matching beauty advisor.

The data extractor 108 is configured to obtain target attributes of a user of the client device 122, where such attributes may comprise the gender of the user as well as attributes relating to the user (*e*.*g*., hair color, approximate age, language spoken by the user). The data extractor 108 is also configured to obtain user input from the user. This may be achieved, for example, by displaying or verbally conveying specific prompts to the user, where the user provides responses to the prompts. For some embodiments, specific prompts are retrieved and utilized based on the target attributes obtained by the data extractor 108. The target attributes may also include the location of the user, where the data extractor 108 may be configured to obtain an Internet Protocol (IP) address, Global Positioning System (GPS) data, or other data from the user's device relating to the location of the device.

The advisor selector 110 is configured to match the user with one or more of the beauty advisors that are currently online. For some embodiments, the advisor selector 110 determines a grouping of beauty advisors currently logged into an account hosted by the makeup consultation service 104. The advisor selector 110 then accesses advisor profiles 118 associated with each of the beauty advisors in the grouping and matches the user with at least one of the beauty advisors based on the target attributes, the user input, and the profile information. The session generator 112 is configured to establish the makeup consultation session between the client device 122 and an advisor device 132 of one of the matching beauty advisors, whereby the client device 122 communicates directly with the advisor device 132. The makeup consultation server device 102 includes a data store 116 for storing the advisor profiles 118 associated with beauty advisors utilizing advisor devices 132.

The client device 122 includes a makeup application 124 executed on a processor of the client device 122 and transmits makeup consultation requests to the client device interface 106. The makeup application 124 is further configured to allow a user to participate in makeup consultation sessions with a beauty advisor via a corresponding advisor device 132. Similarly, each advisor device 132 includes a makeup consultation application 134 that executes on a processor of the advisor device 132, where the makeup consultation application 134 is configured to allow a beauty advisor to participate in makeup consultation sessions with a user on a client device 122.

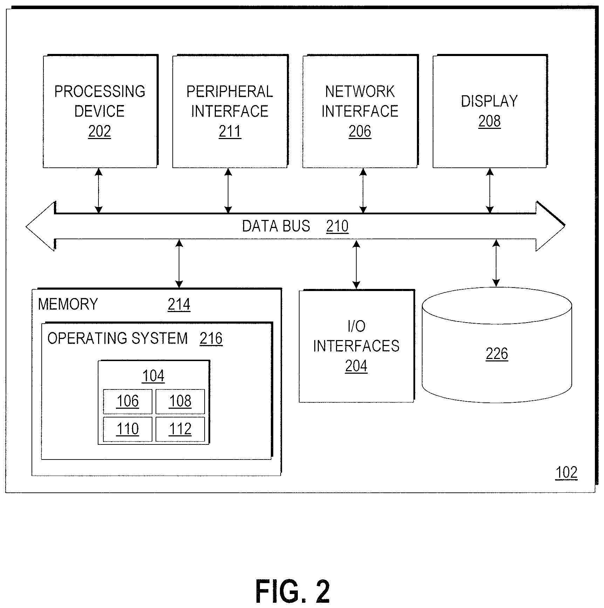

FIG. 2 illustrates a schematic block diagram of the makeup consultation server device 102 in FIG. 1. As discussed above, the makeup consultation server device 102 may be embodied as a server computer, a cloud-based computing device, or any other system providing computing capability. As shown in FIG. 2, the makeup consultation server device 102 comprises memory 214, a processing device 202, a number of input/output interfaces 204, a network interface 206, a display 208, a peripheral interface 211, and mass storage 226, wherein each of these components are connected across a local data bus 210.

The processing device 202 may include any custom made or commercially available processor, a central processing unit (CPU) or an auxiliary processor among several processors associated with the makeup consultation server device 102, a semiconductor based microprocessor (in the form of a microchip), a macroprocessor, one or more application specific integrated circuits (ASICs), a plurality of suitably configured digital logic gates, and other well known electrical configurations comprising discrete elements both individually and in various combinations to coordinate the overall operation of the computing system.

The memory 214 may include any one of a combination of volatile memory elements (*e*.*g*., random-access memory (RAM, such as DRAM, and SRAM, *etc*.)) and nonvolatile memory elements (*e*.*g*., ROM, hard drive, tape, CDROM, *etc*.). The memory 214 typically comprises a native operating system 216, one or more native applications, emulation systems, or emulated applications for any of a variety of operating systems and/or emulated hardware platforms, emulated operating systems, *etc*. For example, the applications may include application specific software which may comprise some or all the components of the makeup consultation server device 102 depicted in FIG. 1. In accordance with such embodiments, the components are stored in memory 214 and executed by the processing device 202, thereby causing the processing device 202 to perform the operations/functions for implementing the features disclosed herein. One of ordinary skill in the art will appreciate that the memory 214 can, and typically will, comprise other components which have been omitted for purposes of brevity. For some embodiments, the components in the makeup consultation server device 102 may be implemented by hardware and/or software.

Input/output interfaces 204 provide any number of interfaces for the input and output of data. For example, where the makeup consultation server device 102 comprises a personal computer, these components may interface with one or more user input/output interfaces 204, which may comprise a keyboard or a mouse, as shown in FIG. 2. The display 208 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

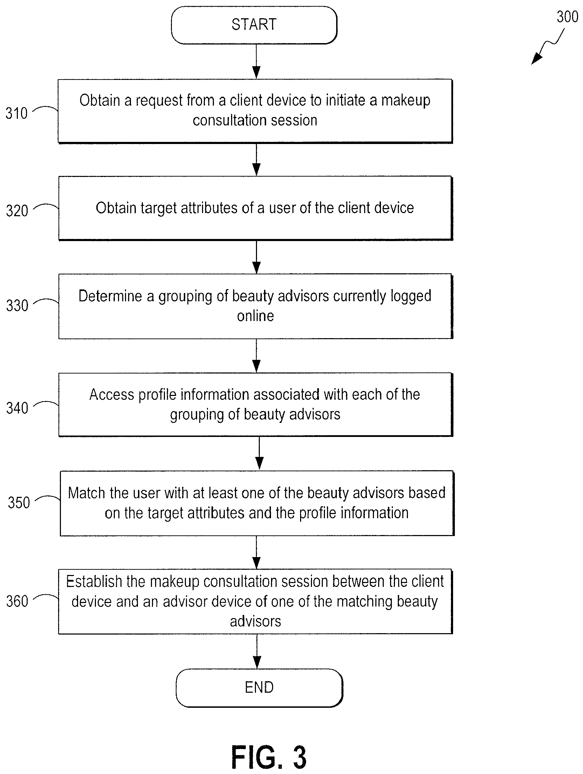

Reference is made to FIG. 3, which is a flowchart 300 in accordance with various embodiments for implementing a makeup consultation platform using the makeup consultation server device 102 in the networked environment of FIG. 1. It is understood that the flowchart 300 of FIG. 3 provides merely an example of the different types of functional arrangements that may be employed to implement the operation of the various components of the makeup consultation server device 102. As an alternative, the flowchart 300 of FIG. 3 may be viewed as depicting an example of steps of a method implemented in the makeup consultation server device 102 according to one or more embodiments.

Although the flowchart 300 of FIG. 3 shows a specific order of execution, it is understood that the order of execution may differ from that which is depicted. For example, the order of execution of two or more blocks may be scrambled relative to the order shown. Also, two or more blocks shown in succession in FIG. 3 may be executed concurrently or with partial concurrence. It is understood that all such variations are within the scope of the present disclosure.

At block 310, the makeup consultation server device 102 obtains a request from a client device 122 (FIG. 1) to initiate a makeup consultation session. At block 320, the makeup consultation server device 102 obtains target attributes of a user of the client device 122, where the target attributes may comprise gender of the user, race, location, hair color, age, skin condition, language, facial features, and other attributes relating to the user. For some embodiments, the makeup consultation server device 102 obtains the target attributes by capturing a video of a facial region of the user, extracting a digital image of the facial region from the video and then extracting target attributes from the digital image of the facial region.

At block 330, the makeup consultation server device 102 determines a grouping of beauty advisors currently logged into an account hosted by a makeup consultation service. At block 340, the makeup consultation server device 102 accesses profile information associated with each of the beauty advisors in the grouping.

At block 350, the makeup consultation server device 102 matches the user with at least one of the beauty advisors based on the target attributes, the user input, and the profile information. For some embodiments, the makeup consultation server device 102 causes graphical representations of the one or more matching beauty advisors to be displayed in a user interface on the client device 122. The makeup consultation server device 102 then obtains a selection of one of the matching beauty advisors, where the makeup consultation session is established between the client device 122 and an advisor device 132 of the beauty advisor selected by the user.

At block 360, the makeup consultation server device 102 establishes the makeup consultation session between the client device 122 and an advisor device 132 of one of the matching beauty advisors. Once the makeup consultation session is established between the client device 122 and the advisor device 132, the image of the virtual advisor is replaced with an image of the selected beauty advisor. Thereafter, the process in FIG. 3 ends.

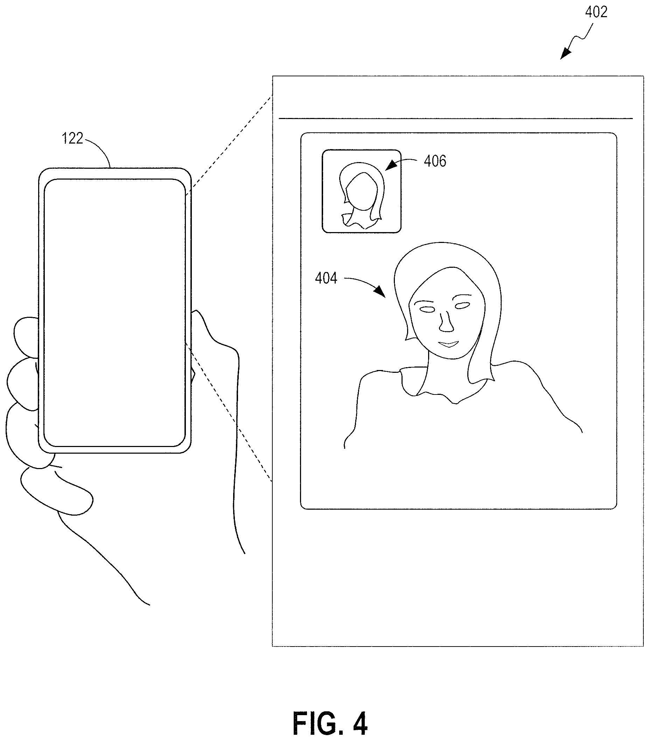

Having described the basic framework of a system for providing makeup consultation, reference is made to the following figures, which further illustrate various features disclosed above. FIG. 4 illustrates an example user interface 402 displayed on a client device 122. For some embodiments, the makeup consultation service 104 (FIG. 1) executing on the makeup consultation server device 102 may cause a user interface 402 to be displayed on the client device 122 in response to obtaining a makeup consultation request from the client device 122. As shown, the user interface 402 includes an image of the user 406 of the client device 122 and an image of a virtual assistant 404, which may comprise, for example, a default image of an individual or other object. As described above, this image of the virtual assistant 404 is later replaced with an image of a matching beauty advisor.

For some embodiments, the makeup consultation service 104 may be configured to capture a video of a facial region of the user and extract a digital image of the facial region from the video. The makeup consultation service 104 may then extract target attributes from the digital image of the facial region, where such target attributes may comprise the gender of the user as well as other attributes relating to the user (*e*.*g*., hair color, approximate age, language spoken by the user). For some embodiments, the virtual assistant 404 shown in the user interface may be configured to initiate a conversation with the user. The makeup consultation service 104 may be configured to analyze the content of the conversation and identify the language spoken by the user. The makeup consultation server device 102 may also display prompts to the user for purposes of obtaining additional information about the user.

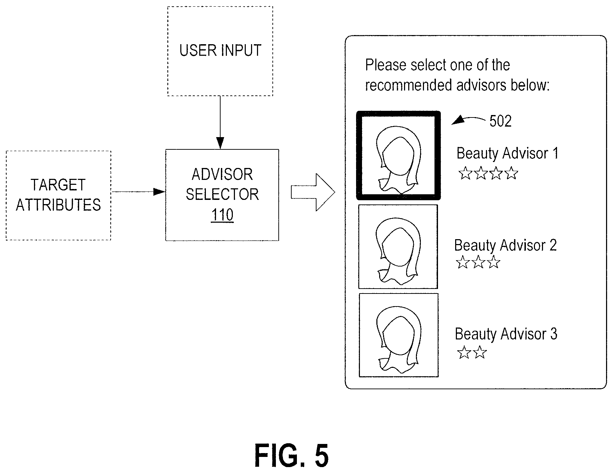

FIG. 5 illustrates matching of a beauty advisor with a user performed by the makeup consultation server device 102 in FIG. 1. As shown, the advisor selector 110 executing in the makeup consultation server device 102 (FIG. 1) receives target attributes and user input and based on this data, the advisor selector 110 matches the user of the client device 122 with one or more beauty advisors. For some embodiments, graphical thumbnail representations 502 of the one or more beauty advisors are displayed in a user interface on the client device 122. Other information relating to the beauty advisors (*e*.*g*., individual ratings) may also be displayed. The user of the client device 122 selects one of the matching beauty advisors, and the makeup consultation service 104 (FIG. 1) then establishes a makeup consultation session between the client device 122 and an advisor device 132 (FIG. 1) of the selected beauty advisor.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A method implemented in a makeup consultation server device, comprising:
obtaining a request from a client device to initiate a makeup consultation session;
obtaining target attributes of a user of the client device;
determining a grouping of beauty advisors currently online;
accessing profile information associated with each of the beauty advisors in the grouping;
matching the user with at least one of the beauty advisors based on the target attributes, and the profile information; and
establishing the makeup consultation session between the client device and an advisor device of one of the matching beauty advisors.

2. The method of claim 1, further comprising:
causing graphical representations of the at least one matching beauty advisor to be displayed in a user interface on the client device; and
obtaining a selection of one of the at least one matching beauty advisors from the client device, wherein the makeup consultation session is established between the client device and an advisor device of the selected one of the at least one matching beauty advisor.

3. The method of claim 1, wherein the target attributes comprise at least one of: a gender of the user, race, location, hair color, age, skin condition, language, and facial features of the user.

4. The method of claim 1, wherein obtaining the target attributes of the user of the client device comprises:
capturing a video of a facial region of the user;
extracting a digital image of the facial region from the video; and
extracting target attributes from the digital image of the facial region.

5. A system, comprising:
a memory storing instructions;
a processor coupled to the memory and configured by the instructions to at least:
obtain a request from a client device to initiate a makeup consultation session;
obtain target attributes of a user of the client device;
determine a grouping of beauty advisors currently online;
access profile information associated with each of the beauty advisors in the grouping;
match the user with at least one of the beauty advisors based on the target attributes, and the profile information; and
establish the makeup consultation session between the client device and an advisor device of one of the matching beauty advisors.

6. The system of claim 5, wherein the processor is further configured to:
cause graphical representations of the at least one matching beauty advisor to be displayed in a user interface on the client device; and
obtain a selection of one of the at least one matching beauty advisors from the client device, wherein the makeup consultation session is established between the client device and an advisor device of the selected one of the at least one matching beauty advisor.

7. The system of claim 5, wherein the target attributes comprise at least one of: a gender of the user, race, location, hair color, age, skin condition, language, and facial features of the user.

8. The system of claim 5, wherein the processor obtains the target attributes of the user of the client device by:
capturing a video of a facial region of the user;
extracting a digital image of the facial region from the video; and
extracting target attributes from the digital image of the facial region.

9. A non-transitory computer-readable storage medium storing instructions to be implemented by a computing device having a processor, wherein the instructions, when executed by the processor, cause the computing device to at least:
obtain a request from a client device to initiate a makeup consultation session;
obtain target attributes of a user of the client device;
determine a grouping of beauty advisors currently online;
access profile information associated with each of the beauty advisors in the grouping;
match the user with at least one of the beauty advisors based on the target attributes, and the profile information; and
establish the makeup consultation session between the client device and an advisor device of one of the matching beauty advisors.

10. The non-transitory computer-readable storage medium of claim 9, wherein the processor is further configured to:
cause graphical representations of the at least one matching beauty advisor to be displayed in a user interface on the client device; and
obtain a selection of one of the at least one matching beauty advisors from the client device, wherein the makeup consultation session is established between the client device and an advisor device of the selected one of the at least one matching beauty advisor.

11. The non-transitory computer-readable storage medium of claim 9, wherein the target attributes comprise at least one of: a gender of the user, race, location, hair color, age, skin condition, language, and facial features of the user.

12. The non-transitory computer-readable storage medium of claim 9, wherein the processor obtains the target attributes of the user of the client device by:
capturing a video of a facial region of the user;
extracting a digital image of the facial region from the video; and
extracting target attributes from the digital image of the facial region.
